# EUROPEAN PATENT SPECIFICATION

(11) **EP 0 708 802 B1**
(45) Date of publication and mention of the grant of the patent: **07.10.1998**
(21) Application number: 94924758.9
(22) Date of filing: 12.07.1994
(51) Int. Cl.: C08L 53/02, C08K 5/04, C08K 5/07, C08K 5/37, C09D 153/02, C09J 153/02

(54) **PROCESS FOR CURING A UV-CURABLE BLOCK COPOLYMER COMPOSITION**
VERFAHREN ZUR HÄRTUNG EINER DURCH UV-STRAHLEN HÄRTBAREN BLOCKCOPOLYMERZUSAMMENSETZUNG
PROCEDE POUR DURCIR UNE COMPOSITION DE COPOLYMERES EN BLOCS DURCISSABLE AUX ULTRAVIOLETS

(30) Priority: 14.07.1993 EP 93202072; 08.03.1994 EP 94200599
(43) Date of publication of application: 01.05.1996
(73) Proprietor: SHELL INTERNATIONALE RESEARCH MAATSCHAPPIJ B.V., 2596 HR Den Haag (NL)
(72) Inventor: DUPONT, Martine, Jeanne, B-1348 Ottignies (BE); DE KEYZER, Noel, Raymond, Maurice, Louvain-la-Neuve B-1348 Ottignies (BE); MORREN, Karin, Marie-Louise, Renee, Louvain-la-Neuve B-1348 Ottignies (BE)
(86) International application number: EP9402314
(87) International publication number: WO9502640

(56) References cited:
- WO-A-93/24547
- US-A- 4 556 464

## Description

The present invention relates to a process for curing a UV-curable block copolymer composition. More specifically, the present invention relates to a process for curing a UV-curable block copolymer composition for adhesives, sealants and coatings comprising an elastomeric block copolymer and at least one photoinitiator.

From PCT application No. WO 88/01281 a radiation curable rubber-based pressure-sensitive adhesive composition is known comprising at least one elastomeric rubber-based adhesive and a polythiol as the cross-linking agent. This composition can be cured by exposure to either electron beam radiation or UV irradiation. In the latter case, the additional presence of a photoinitiator is required. The presence of a cross-linking agent, in particular a polythiol, is taught to be essential for obtaining a cured pressure-sensitive adhesive composition having good adhesion properties and elevated temperature shear.

However, it would be attractive for economical and processing reasons to reduce the number of components and still obtain a curred adhesive composition having excellent properties, also at elevated temperatures.

U.S. Patent No. 5,093,406 discloses a pressure-sensitive adhesive comprising a free radical cured product formed by e.g. UV curing of a mixture containing:
(a) 15-60 parts by weight (pbw) of an unsaturated elastomer component, suitably comprising styrene-isoprene diblock and styrene-isoprene-styrene triblock copolymers,
(b) 85-40 pbw of a hydrogenated styrene based tackifying resin,
(c) 0-15 pbw of a reinforcing resin for the polystyrene endblock of the elastomer component, and
(d) 0-10 pbw of a polythiol cross-linking agent.

WO-A-93/24547 which is published on 09.12.93 discloses a UV-curable copolymer composition comprising a multi-armed block copolymer and at least one photoinitiator containinq a carbonyl group, which is directly bonded to at least one aromatic ring structure. The blockcopolymer has the structure (AB)p(B)qX, wherein p has a number average of at least 1.5 and q has a number average of at least 0 or higher and the sum of p and q being at least 4, the vinyl aromatic block A has an apparent molecular weight of 7 000 - 50 000 and the polybutadiene block B has an apparent molecular weight of 15 000 - 250 000. In WO-A-93/24547 the crosslinking reaction is effected within the confines of an inert atmosphere to prevent interference in the block copolymer crosslinking.

US-A-4 556 464 discloses a UV-curable adhesive composition comprising a multi-armed block copolymer, at least one photoinitiator containing a carbonyl group, which is directly bonded to at least one aromatic ring structure and desirably a crosslinking agent. The multi-armed block copolymer comprises a random copolymer of a vinyl aromatic monomer and and a conjugated diene monomer. Although the presence of a polythiol cross-linking agent is left optional, it is clearly a preferred embodiment, which for instance becomes readily apparent from the working examples, where only compositions containing a polythiol cross-linking agent are described.

Hence, the need for a UV-curable composition, which does not require the presence of a cross-linking agent for an effective curing and which can be suitably applied in e.g. hot melt adhesive compositions, still remains.

Often, rubber-based hot melt adhesive, sealant and coating compositions which do not contain any cross-linking agent, need to be cured in an atmosphere containing as little oxygen as possible. Upon exposure to UV irradiation namely, the aliphatic double bonds present in the rubber will open thus forming free radicals. The various rubber polymer chains containing free radicals along the polymer chains interact with each other through said free radicals as a result of which the desired cross-linking is accomplished. However, the free radicals also readily react with oxygen to form peroxides. It will be appreciated that the formation of such peroxides seriously hampers the cross-linking reaction.
Consequently, curing of rubber based compositions which do not contain any cross-linking agent is conveniently performed in an inert gas atmosphere, most suitably in a nitrogen atmosphere. It will be understood that the requirement of an oxygen-poor atmosphere seriously hampers the commercial development of UV curing of rubber-based hot melt adhesives, sealants and coatings which are free of cross-linking agent.

It would therefore be advantageous if UV curing could be performed in an atmosphere, wherein oxygen is present in minor traces up to normal amounts, i.e. from about as little as 1 volume % to the normal value in air of about 21 volume %. From a commercial as well as an economical point of view it is highly attractive to operate in relatively oxygen rich atmospheres, as no expensive equipment and specific precautions are necessary to ensure an oxygen-free atmosphere.

Hence, it is an object of the present invention to provide a process for curing a UV-curable hot melt adhesive, sealant or coating composition which process does not require the presence of any cross-linking agent and which process can be carried out in an oxygen-containing atmosphere.

Accordingly, the present invention relates to a process for curing a UV-curable block copolymer composition comprising:
(a) 100 parts by weight of a multiarmed block copolymer which has the structure according to any one of the general formulae:

   (AB)ₙX, (BA)ₙX, (ABA)ₙX, (BAB)ₙX or (AB)ₚ(B)_{q}X,

   wherein A is a polymer block of a monovinyl aromatic compound, wherein B is a polymer block of a conjugated diene, wherein n represents an integer of 2 or higher and p and q represent an integer of 1 or higher and wherein X is the residue of the coupling agent used, wherein:
   - the content of monovinyl aromatic compound is in the range of from 5 to 50% by weight based on the total weight of block copolymer;
   - each block A has an apparent molecular weight in the range of from 1,000 to 50,000; and
   - each block B has an apparent molecular weight in the range of from 10,000 to 250,000; and
(b) 0.5-30 parts by weight of at least one photoinitiator, containing a carbonyl group which is directly bound to at least one aromatic ring structure;
   and wherein said composition is free from a cross-linking agent, by exposing said composition to UV radiation in an oxygen-containing atmosphere.

With the expression "apparent molecular weight" as used throughout this description, the molecular weight as determined by Gel Permeation Chromatography using polystyrene calibration standards is meant.

Preferably, the composition comprises from 5 to 20 pbw of at least one photoinitiator.

Common coupling agents are for instance divinyl benzene, silicon tetrachloride, gamma glycidoxy-propyl-trimethoxylsilane and dibromoethane. A preferred block copolymer has the general formula (AB)ₙX with A and B as previously defined, n representing an integer in the range of from 3 to 20, preferably 4 to 12, and X representing a coupling agent residue, preferably, the residue of divinyl benzene. The multi-armed block copolymers may be prepared by coupling living sequentially prepared intermediate polymer chains by using any conventional coupling techniques, such as e.g. disclosed in U.S. Patents Nos. 3,231,635; 3,431,323; 3,251,905; 3,390,207; 3,598,887 and 4,219,627.

The monovinyl aromatic compound may be selected from styrene, α-methylstyrene, o-methylstyrene, p-methylstyrene, p-tert-butyl-styrene, 1,3-dimethylstyren or mixtures thereof, of which styrene is most preferred.

Suitable conjugated dienes to be used in the block copolymer of component (a) are 1,3-butadiene, 2-methyl-1,3-butadiene (isoprene), 2,3-dimethyl-1,3-butadiene, 1,3-pentadiene, 1,3-hexadiene or mixtures thereof, of which 1,3-butadiene, isoprene or mixtures thereof are the preferred monomers. Isoprene is most preferred.

As already indicated supra, it is preferred that the block copolymer is a multi-armed styrene(S)-isoprene(I) or styrene-butadiene(B) block copolymer having a styrene content in the range of from 5 to 25% by weight. An example of a commercially available multi-armed S-I block copolymer is KRATON D-1320X (KRATON is a trade mark).

The photoinitiator component (b) in the block copolymer composition according to the present invention may be composed of one or a combination of two or more photoinitiators. In any event, at least one of the photoinitiators used must be a compound containing a carbonyl group which is directly bonded to at least one aromatic ring structure. It is preferred that this photoinitiator is selected from the group consisting of:
(1) at least one benzophenone of the general formula (I) 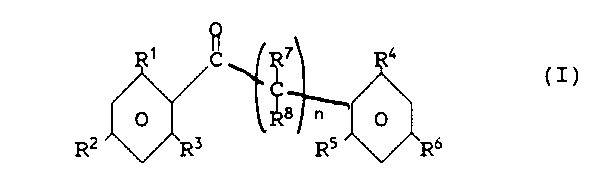 wherein R¹ to R⁸ independently represent hydrogen or an alkyl group having from 1 to 4 carbon atoms, preferably methyl, and wherein R⁷ and/or R⁸ represent in addition alkoxy of 1 to 4 carbon atoms and wherein n has a value of 0, 1 or 2, optionally in combination with at least one tertiary amine,
(2) at least one sulphur-containing carbonyl compound, wherein the carbonyl group is directly bound to at least one aromatic ring, preferably of the general formula II 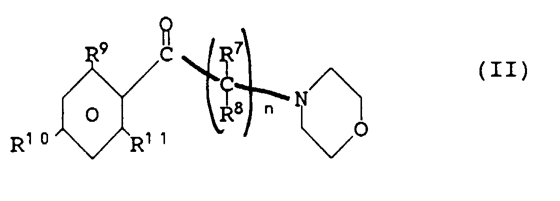 wherein R⁹, R¹⁰, R¹¹ each may represent hydrogen, alkyl of 1-4 carbon atoms or an alkylthio group, having 1 to 4 carbon atoms, and
(3) mixtures of (1) and (2).

Examples of suitable compounds of category (1) are benzophenone, 2,4,6-trimethylbenzophenone, 4-methylbenzophenone and an eutectic mixture of 2,4,6-trimethylbenzophenone and 6-methylbenzophenone (ESACURE TZT) and 2,2-dimethoxy-1,2-diphenylethan-1-one (IRGACURE 651) (ESACURE and IRGACURE are trade marks). These compounds may be employed in combination with tertiary amines, such as e.g. UVECRYL 7100 (UVECRYL is a trade mark).

Category (2) embraces compounds such as e.g. 2-methyl-1-[4-(methylthio)phenyl]-2-morpholinopropanone-1, commercially available as IRGACURE 907 (IRGACURE is a trade mark).

An example of suitable mixtures (category (3)) is a mixture of 15% by weight of a mixture of 2-isopropylthioxanthone and 4-isopropylthioxanthone, and 85% by weight of a mixture of 2,4,6-trimethylbenzophenone and 4-methylbenzophenone. This mixture is commercially available under the trade name ESACURE X15.

Photoinitiators of any one of the above categories (1), (2) and (3) may also be used in combination with other photoinitiators, such as e.g. UVECRYL P115. Particularly useful is a combination of benzophenone and said UVECRYL P115.

In a preferred embodiment of the present invention the photoinitiator is selected from the group consisting of (i) benzophenone, (ii) a mixture of benzophenone and a tertiary amine containing a carbonyl group which is directly bonded to at least one aromatic ring, and (iii) 2-methyl-1-[4-(methylthio)phenyl]-2-morpholinopropanone-1. Of these 2-methyl-1-[4-(methylthio)phenyl]-2-morpholinopropanone-1 is most preferred.

The photoinitiator should be present in an amount of from 0.5 to 30 parts by weight per 100 parts by weight of block copolymer (phr) to ensure sufficient cross-linking upon exposure to UV irradiation. It is preferred that the photoinitiator is present in an amount of from 5 to 20 phr.

The UV irradiation used for cross-linking the block copolymer composition of the present invention in principle may be any UV source having an output spectra showing one or more peaks at wavelengths between 200 and 500 nanometer (nm). Particularly suitable UV sources are Fusion bulb lamps (Fusion is a trade mark) having output maxima at 260-270 nm, 320 nm and 360 nm ("H" bulb), at 350-390 nm ("D" bulb) or at 400-430 nm ("V" bulb). Combinations of these Fusion bulb lamps may also be used. H and D bulb lamps (linear power 300 W/inch) are particularly useful, while a combination of D bulb and H bulb can also be suitably applied.

The exposure to UV irradiation may be performed by any known method. A suitable method for instance is exposing a sample either in a layer obtained from a hot melt or in a layer obtained by solvent coating to UV irradiation by passing said sample at a certain speed (expressed in meters per minute, m/min) underneath the UV source. If necessary, the exposure to irradiation may be repeated one or more times, e.g. by repeatedly passing the sample underneath the UV source or by passing the sample underneath two or more lamps positioned in series, in order to accomplish sufficient curing. The lower the total irradiation dose and the higher the speed with which the sample can be passed underneath the UV source for obtaining sufficient and satisfactory curing, the better the curing ability of the said sample.

The UV curable block copolymer composition according to the present invention can be suitably applied in hot melt as well as solvent adhesive compositions, sealants and coatings. When used in adhesive compositions, common additives, such as a tackifying resin, a softening oil and an antioxidant may also be present. For instance, a suitable hot melt adhesive composition may comprise in addition to the block copolymer composition of the present invention:
(c) 10-300 parts by weight per 100 parts by weight of block copolymer (phr) of at least one resin which is compatible with the poly(conjugated diene) polymer block(s);
(d) 0-150 phr of a plasticizer; and
(e) 0.5-5 phr of an antioxidant.

Suitable poly(conjugated diene) compatible resins are tackifying resins and liquid resins, such as e.g. polyterpene resins, polyindene resins, rosin esters, hydrogenated rosins, alpha-pinene resins, beta-pinene resins, hydrocarbon resins of petroleum origin and phenolic resins. Examples are REGALITE R91, R101, R 125 and S260 (REGALITE is a trade mark), ESCOREZ 1310 and 5380 (ESCOREZ is a trade mark), WINGTACK 95 (WINGTACK is a trade mark), FORAL 85 and 105 (FORAL is a trade mark), PICCOLYTE A115, S115 and S10 (PICCOLYTE is a trade mark) and PICCOTAC 95E. The use of resins having a low degree of unsaturation, such as REGALITE R91, R101 or R 125, is preferred.

As a plasticizer mineral oils, both naphthenic and paraffinic oils, or low molecular weight polybutylene polymers may be used. Examples of suitable plasticizers are SHELLFLEX 371 and 451 and TUFFLO 6204 (naphthenic oils), TUFFLO 6056 (paraffinic oil) and the polybutylenes HYVIS 200, NAPVIS 30 and NAPVIS D-10. SHELLFLEX, TUFFLO, HYVIS and NAPVIS are trade marks. Also very useful are REGALREZ 1018 (REGALREZ is a trademark), ONDINA 68 (ONDINA is a trade mark) and V-OIL 7047 (V-OIL is a trade mark).

As component (e) any antioxidant commonly applied in adhesive formulations may be used. An example of such antioxidant is the phenolic compound IRGANOX 1010 (IRGANOX is a trade mark).

In addition to the components (c), (d) and (e) other additives, such as endblock compatible resins, UV stabilizers, fillers, and flame retarders, may be present as well depending on the specific conditions under which the hot melt adhesive composition is to be used.

Hot melt adhesive compositions, sealant compositions and coating compositions comprising the UV-curable block copolymer composition described hereinbefore also form part of the present invention. The same applies for cured compositions obtained by exposing said adhesive, sealant and coating compositions to UV irradiation.

The invention is further illustrated by the following examples, however without restricting the scope of the invention to these specific embodiments.

The photoinitiators used in the examples have been abbreviated as follows:

| | | | |
|---|---|---|---|
| TZT | ESACURE TZT | I184 | IRGACURE 184 |
| X15 | ESACURE X15 | I651 | IRGACURE 651 |
| P115 | UVECRYL P115 | I907 | IRGACURE 907 |
| UVEC | UVECRYL 7100 | Benz | Benzophenone |

Unless otherwise mentioned, the samples were irradiated by a UV source while being exposed to a soft flow of nitrogen. This flow of nitrogen was such that oxygen was still present during irradiation. Accordingly, irradiation took place in the presence of up to 10 volume % of oxygen.

### Example 1

A formulation consisting of a multi-armed S-I block copolymer, two polyisoprene compatible resins and an antioxidant was prepared by intimately mixing:
100 pbw of KRATON D-1320X,
150 phr REGALITE R91,
60 phr REGALREZ 1018, and
1 phr IRGANOX 1010.
KRATON D-1320X is a multi-armed block copolymer consisting of S-I block copolymer arms. The coupling agent used is divinylbenzene. It has a polystyrene content of 10% by weight. The apparent molecular weight of each S-I arm is about 100,000 and the peak molecular weight of each polystyrene block is about 11,000. The total number of arms may vary from 6 to 100 and usually is between 6 and 40.

To this formulation several photoinitiators were added after which the compositions thus obtained were exposed to UV irradiation by passing the formulation as a hot melt underneath a single Fusion D bulb lamp (F300; 300 W/inch) at a speed of 5 m/min. Of these compositions the Shear Adhesion Failure Temperature (SAFT) was measured. A value of 140 °C or higher is acceptable. The results are listed in Table I.

**TABLE I**

| UV curing of several formulations | | | | | | |
|---|---|---|---|---|---|---|
| photoinitiator (pbw) | | | | | | |
| TZT | X15 | I651 | I184 | UVEC | SAFT (°C) | |
| | | | | | 1 pass | 2 passes |
| 5 | | | | | 110 | >160 |
| 10 | | | | | >160 | >160 |
| | 5 | | | | 114 | >160 |
| | 10 | | | | >160 | >160 |
| 3 | | | 2 | 10 | >160 | >160 |
| 5 | 5 | | | | 151 | >160 |
| 3 | | 3 | | | 137 | 140 |
| 5 | | | | 10 | >160 | >160 |
| 10 | | | | 10 | >160 | >160 |

From table I it is clear that all formulations show excellent SAFT values after 2 passes underneath the D bulb UV lamp, (300 W/inch) while five formulations already give excellent SAFT values, i.e. >160 °C, after only 1 pass.

### Example 2

The same base formulation as used in Example 1 was employed for the evaluation of the effect on the SAFT values of the speed with which a formulation is passed underneath various UV sources. The photoinitiator used was IRGACURE 907 in an amount of 5 pbw per 100 pbw of block copolymer. When two bulb lamps were positioned in series (indicated as D+V, D+H and D+D), the exposure to the irradiation originating from the second lamp took place in air, so without applying a nitrogen flow. The results are listed in table II; the SAFT values listed are given in °C.

**TABLE II**

| SAFT values after UV curing at different speeds and with different UV lamps | | | | | |
|---|---|---|---|---|---|
| Speed (m/min) | D bulb | | D+H* bulb | D+V* bulb | D+D bulb |
| | 1 pass | 2 passes | 1 pass | 1 pass | 1 pass |
| 5 | >160 | >160 | >160 | >160 | >160 |
| 10 | 112 | >160 | >160 | >160 | 123 |
| 15 | 104 | 131 | >160 | 118 | 105 |
| 20 | 97 | 106 | 156 | 104 | 98 |

| | | | | | |
|---|---|---|---|---|---|
| *The H and V bulb had a linear power of 300 W/inch (120 W/cm) | | | | | |

From table II it is clear that particularly the combination of a D bulb lamp followed by a H bulb lamp gives excellent results, even at such high speed as 20 m/min.

Characteristic adhesive properties (loop tack and peel adhesion) were also measured of same irradiated samples as listed in Tables III and IV.

**TABLE III**

| Looptack: Influence of the lamp and speed (N/25mm) | | | | | | | |
|---|---|---|---|---|---|---|---|
| Speed M./Min. | D-Bulb (1 lamp) | | | | D+H Bulb | D+D Bulb | |
| | 1 pass | | 2 passes | | 1 pass | 1 pass | |
| | with | without | with | without | with | with | without |
| 5 | 26* | 28 | 26 | 25 | 23 | 21 | 21 |
| 10 | 27 | - | 25 | - | 21 | 26 | - |
| 15 | 25* | 26* | 24 | 24* | 26 | 22 | - |
| 20 | 25 | - | 22 | - | 23 | 24 | - |

| | | | | | | | |
|---|---|---|---|---|---|---|---|
| 'with': means with low N₂ flow - 'without': means that the samples were cured in open atmosphere (no N₂ flow). *: zippery tack | | | | | | | |

**TABLE IV**

| Peel adhesion: Influence of the lamp and speed (N/25mm) | | | | | | | |
|---|---|---|---|---|---|---|---|
| Speed M./Min. | D-Bulb (1 lamp) | | | | D+H Bulb | D+D Bulb | |
| | 1 pass | | 2 passes | | 1 pass | 1 pass | |
| | with | without | with | without | with | with | without |
| 5 | 19 | 19 | 16 | 17 | 17 | 19 | 19 |
| 10 | 20* | - | 18 | - | 17 | 19 | - |
| 15 | 17 | 19 | 19 | 18 | 16 | 17 | - |
| 20 | 16 | - | 20 | - | 21 | 19 | - |

From these tables it will be appreciated that the adhesive properties are not damaged by the curing.

### Example 3

The same formulation as used in Example 2 was employed and exposed to irradiation using a Fusion H bulb lamp (F300) with and without a nitrogen flow. The formulation was exposed to irradiation by passing it at different speeds once and twice underneath the H bulb as well as by passing it once underneath two H bulb lamps positioned in series. The SAFT values (in °C) were measured after each pass. The results are listed in table V.

**TABLE V**

| SAFT values after UV curing with and without nitrogen flow | | | | | |
|---|---|---|---|---|---|
| Speed (m/min) | 1 lamp | | | | 2 lamps |
| | 1 pass | | 2 passes | | 1 pass |
| | with | without | with | without | without |
| 5 | 173 | 166 | 174 | 169 | 172 |
| 10 | 146 | 159 | 160 | 159 | 155 |
| 15 | 106 | 108 | 137 | 152 | 167 |
| 20 | 88 | 85 | 107 | 101 | 117 |

From table V it can be derived that irradiation in air, so without applying a nitrogen flow, results in excellent SAFT values which are similar to, and in some cases even better than, the SAFT values obtained by applying a nitrogen flow during exposure to irradiation.

### Example 4

Several photoinitiators and combinations of photoinitiators were added to the base formulation as used in Example 1. The compositions thus obtained (compositions A to G) were cured by passing them three times (1p, 2p, 3p) at a speed of 5 m/min underneath a Fusion D bulb lamp. The SAFT values, of some compositions the Holding Power at 95 °C (HP 95°C) and the peel adhesion 180° were determined after each pass. The results are listed in table VI.

**TABLE VI**

| UV curing of block copolymer compositions | | | | | | | | |
|---|---|---|---|---|---|---|---|---|
| Composition | | A | B | C | D | E | F | G |
| Benz | | 5 | 5 | 10 | 10 | 5 | | 10 |
| I651 | | | 5 | | 5 | | | |
| UVEC | | | | | | 10 | | |
| P115 | | | | | | | | 10 |
| I907 | | | | | | | 5 | |
| | 1p | 150 | 148 | 157 | 133 | 155 | >160 | 141 |
| SAFT (°C) | 2p | >160 | >160 | 158 | >160 | >160 | >160 | 147 |
| | 3p | >160 | >160 | 159 | >160 | >160 | >160 | 151 |
| | | | | | | | | |
| | 1p | >100 | >100 | >100 | >100 | | >100 | |
| HP 95°C | 2p | >100 | >100 | >100 | >100 | | >100 | |
| | 3p | >100 | >100 | >100 | >100 | | >100 | |
| | | | | | | | | |
| Peel- | 1p | 20 | 18 | 16 | 19 | 16 | 16 | 10 |
| adh. 180° | 2p | 18 | 20 | 21 | 21 | 16 | 15 | 12 |
| (N/25mm) | 3p | 21 | 20 | 18 | 22 | 17 | 16 | 13 |

From table VI it can be seen that in particular the UV cured adhesive compositions A to F exhibit excellent adhesive properties.

### Example 5

A formulation, comprising:

| | |
|---|---|
| KRATON D-1320 X | 100 phr |
| REGALITE R 91 | 150 phr |
| REGALREZ 1018 | 60 phr |
| IRGACURE 907 | 5 phr |
| IRGANOX 1010 | 1 phr |

was tested with irradiation from another UV-lamp, the H-bulb, which substantially emits the conventional mercury spectrum.

The SAFT test results obtained have been listed in Table VII:

**Table VII**

| SAFT: Influence of the H-bulb lamp (°C) | | | | | |
|---|---|---|---|---|---|
| Speed M./Min. | 1 Lamp | | | | 2 Lamps |
| | 1 pass | | 2 passes | | 1 pass |
| | with | without | with | without | without |
| 5 | 171 | 167 | 171 | 169 | 168 |
| 10 | 145 | 148 | 164 | 155 | 147 |
| | >160 | >160 | | | |
| 15 | 99 | 107 | 137 | 152 | >160 |
| 20 | 88 | 85 | 107 | 101 | 112 |

From this table VII it will be appreciated that the N₂ is not necessary and has hardly any influence on the curing efficiency of this formulation. Moreover it appeared possible to have a good curing efficiency with two passes under the H-lamp up to 15 m/min (SAFT higher than 150 °C).

The adhesive properties of these samples have also been measured and listed in Tables VIII and IX.

**Table VIII**

| LOOPTACK: Influence of the H-bulb lamp (N/25mm) | | | | | |
|---|---|---|---|---|---|
| Speed M./Min. | 1 Lamp | | | | 2 Lamps |
| | 1 pass | | 2 passes | | 1 pass |
| | with | without | with | without | without |
| 5 | 25 | 23 | 15* | 18 | 21 |
| 10 | 24 | 25 | 24 | 24 | 21 |
| 15 | 24 | 23 | 23 | 25 | 23 |
| 20 | 23 | 20* | 20 | 20 | 21* |

| | | | | | |
|---|---|---|---|---|---|
| * = zippery tack | | | | | |

**TABLE IX**

| Peel adhesion: Influence of the H-bulb lamp (N/25mm) | | | | | |
|---|---|---|---|---|---|
| Speed M./Min. | 1 Lamp | | | | 2 Lamps |
| | 1 pass | | 2 passes | | 1 pass |
| | with | without | with | without | without |
| 5 | 20 | 20 | 17 | 18 | 16 |
| 10 | 18 | 18 | 17 | 18 | 16 |
| 15 | 19 | 20 | 16 | 16 | 19 |
| 20 | 19 | 21 | 20 | 22 | 19 |

From the previous results it will be appreciated that the adhesive properties are not damaged by the curing whatever the curing speed or dose.

### Example 6

A similar formulation (KRATON D-1320X/REGALITE R91/REGALREZ 1018/IRGANOX 1010;100/150/60/1) was used with a combination of benzophenon and EBECRYL 7100 (or UVECRYL 7100: both trade names exist for the same product) as photoinitiator. The samples were irradiated under a H-bulb at different speeds. The temperature resistance results (SAFT and Holding Power 95 °C) have been listed in Tables X and XI:

**TABLE X**

| SAFT: Influence of curing speed (°C) | | | | | | | | | |
|---|---|---|---|---|---|---|---|---|---|
| Adjusted components | | | | | | | | | |
| benz. | EBECRYL | 5 m./min. | | 10 m./min. | | 15 m./min. | | 20 m./min. | |
| | | 1p | 2 p | 1p | 2 p | 1p | 2 p | 1p | 2 p |
| 10 | 10 | 156 | 163 | 154 | 158 | 92 | 159 | 111 | 130 |
| 5 | 10 | 155 | 169 | 159 | - | 97 | 105* | 95 | 108* |

| | | | | | | | | | |
|---|---|---|---|---|---|---|---|---|---|
| * = zippery tack | | | | | | | | | |

**TABLE XI**

| | | | | | | | | |
|---|---|---|---|---|---|---|---|---|
| HP 95 °C: Influence of curing speed (h) | | | | | | | | |

| Adjusted components | | | | | | | | |
|---|---|---|---|---|---|---|---|---|
| benz. | EBECRYL | 5 m./min | 10 m./min | | 15 m./min | | 20 m./min | |
| | | 500 g 1 kg | 500 g | 1 kg | 500 g | 1 kg | 500 g | 1 kg |
| 10 | 10 | 1 p | > 100 | | 6 | | 0.07 | |
| | | 2 p | > 100 | 61 | > 100 | 77 | 15 | |

From these data it will be clear that also good curing efficiency was obtained in open air with a combination of benzophenon and tertiary amine as photoiniator.

### Example 7

1. Two radiation curable block copolymer mixtures (A and B) of molecular structure (SB)ₘBₙX, wherein m + n = 4, and each of m and n had an average value of about 2, wherein X represented the residue of tetrachlorosilane, were tested in an "open air" irradiation process with two photoinitiators covered by the present application, i.e. IRGACURE 651 and IRGACURE 907 respectively.

Further details of these polymers have been listed in Table XII.

**TABLE XII**

| Polymer | | A | | | B | |
|---|---|---|---|---|---|---|
| % PS | | 12.7 | | | 10.8 | |
| % vinyl | | 54 | | | 56 | |
| CE | | 96 | | | 95 | |
| T_{g} | | -59 °C | | | -56 °C | |
| MFR | | 8.1 | | | 1.4 | |
| | | | | | | |
| Adhesive Composition | (3) | | (4) | (5) | | (6) |
| | | | | | | |
| polymer | | 100 phr | | | 100 | |
| REGALITE 91 | | 147 | | | 129 | |
| REGALEZ 1018 | | 63 | | | 81 | |
| IRGACURE 651 | | | 3 | 3 | | |
| IRGACURE 907 | 3 | | | | | 3 |
| IRGANOX 1010 | | 2 | | | 2 | |

The samples were cured at different speeds, under a F-300 D-bulb lamp. These adhesive formulations were irradiated in direct cure, with low N₂ flow. The results have been listed in Table XIII.

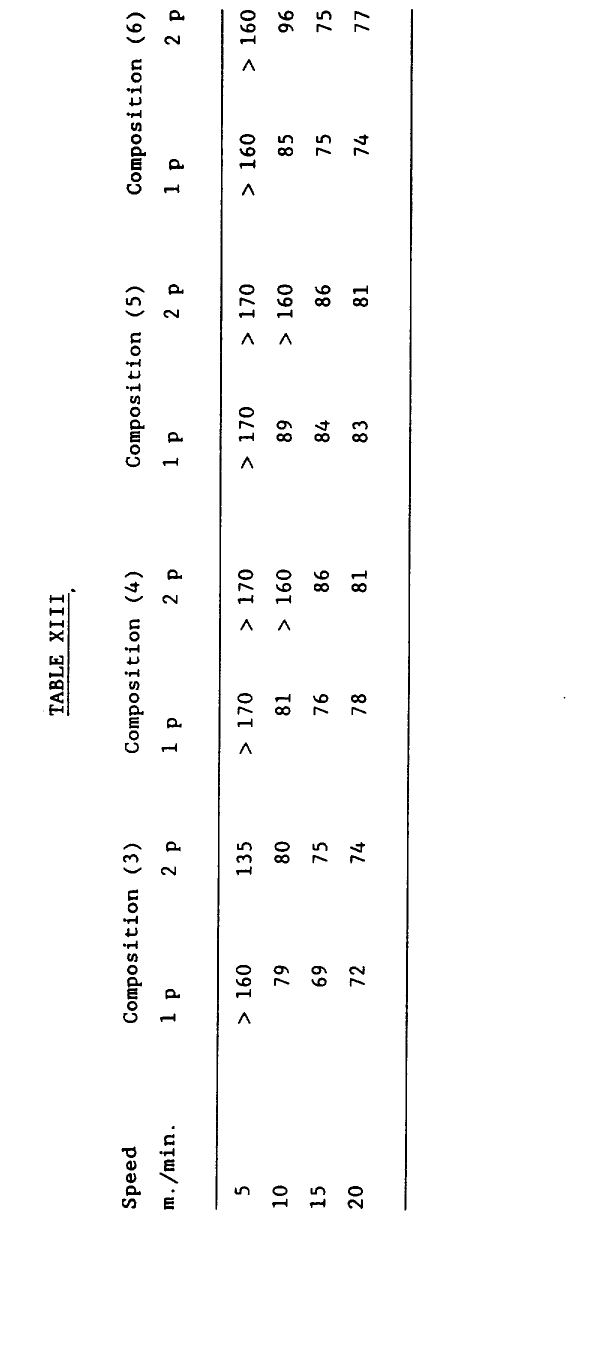

2. The experimental polymers A and B of the formula (SB)ₘBₙX were then cured with a more powerful lamp at higher speeds, without any nitrogen flow.

The photoinitiators IRGACURE 651 and 907 were both tested in compositions, containing the same other ingredients as specified in Table XII, i.e. formulation 4 is based on A polymer with IRGACURE 651, formulation 5 is based on B polymer with IRGACURE 651, formulation 6 is based on B with IRGACURE 907.

All the samples were irradiated in direct curing by means of Fusion F-600 lamps.

The results have been listed in Tables XIV and XV.

**TABLE XIV**

| Speed m./min | D-bulb | | | H-bulb | | |
|---|---|---|---|---|---|---|
| | 4 | 5 | 6 | 4 | 5 | 6 |
| 0 | 75 | 80 | | 1 75 | 80 | |
| 10 | >170 | >170 | >170 | >170 | >170 | >170 |
| 20 | 77 | >170 | >170 | 170 | >170 | >170 |
| 25 | 90 | 153 | >170 | 166 | >170 | >170 |
| 30 | 80 | 105 | >170 | 1 95 | >170 | >170 |
| 40 | 74 | 86 | 141 | 1 86 | 118 | >170 |
| 50 | 76 | 86 | 95 | 1 77 | 92 | 127 |

SAFT results (°C) for samples cured under one F-600 lamp

**TABLE XV**

| Speed m./min | D + D bulb | | D + H bulb | | |
|---|---|---|---|---|---|
| | 4 | 5 | 4 | 5 | 6 |
| 0 | 75 | 80 | 75 | 80 | |
| 20 | >170 | >170 | >170 | >170 | >170 |
| 30 | >170 | >170 | 150 | >170 | >170 |
| 40 | 111 | >170 | 106 | 147 | >170 |
| 50 | 82 | 114 | 86 | >170 | >170 |
| 60 | 80 | 110 | 84 | >170 | >170 |

SAFT results (°C) for samples cured under a combination of F-600 lamps

It will be appreciated that improved results were obtained, when using the IRGACURE 907 photoinitiators. The best results were obtained for a B polymer based formulation irradiated by a combination of D and H bulbs. In this case, SAFT results higher than 170 °C could be obtained at a speed of 60 m./min! This is the highest speed which ever could be reached in radiation curing.

### Holding Power (HP) at 95 °C:1 kg.

Only the samples which had good temperature resistance properties were selected to perform a HP 95 °C test, as listed in Table XVI.

**TABLE XVI**

| Speed m./min | D-bulb | | | H-bulb | | |
|---|---|---|---|---|---|---|
| | 4 (h) | 5 (h) | 6 (h) | 4 (h) | 5 (h) | 6 (h) |
| 10 | >100 | >100 | >100 | >100 | >100 | >100 |
| 20 | - | >100 | >100 | 0.5/12.5 | >100 | >100 |
| 25 | - | - | >100 | 0/42 | 9.5/>100 | >100 |
| 30 | - | - | >100 | 0 | >100 | >100 |
| 40 | - | - | - | - | - | 8.6 |

HP 95 °C results of samples cured under one F-600 lamp

**TABLE XVII**

| Speed m./min | D + D bulbs | | D + H bulbs | | |
|---|---|---|---|---|---|
| | 4 (h) | 5 (h) | 4 (h) | 5 (h) | 6 (h) |
| 20 | >100 | >100 | >100 | >100 | >100 |
| 30 | >100 | >100 | 19/>100 | >100 | >100 |
| 40 | - | >100 | - | >100 | >100 |
| 50 | - | - | - | >100 | >100 |
| 60 | - | - | - | >100 | >100 |

HP 95 °C results of samples cured under a combination of F-600 lamps

Here again we can see the good temperature performance (HP95 °C > 100 h) of the experimental polymers when using IRGACURE 907 photoinitiator. IRGACURE 907 enabled the achievement of higher curing speeds.

From the preceding examples it will be appreciated that it became possible to effectively cure in presence of oxygen without the need of a N₂ flow. High curing efficiency and temperature resistance properties achievable at high speed could be reached.

### Example 8

(i) Five standard radiation sensitive compositions were prepared, comprising 100 parts by weight of each of the block copolymers containing poly(styrene) and poly(butadiene) blocks, listed in Table XVIII, 1 part by weight of the antioxidant IRGANOX 1010 and 2 parts by weight of photosensitizer IRGACURE 651.

The last block copolymer listed in the table is not according to the claimed invention and has been included as comparative example.

**TABLE XVIII**

| Polymer characteristics | | | | | | |
|---|---|---|---|---|---|---|
| Block Copolymer | Mol.wt. (x1000) of S block | Mol.wt. (x1000) of S-B block | Total mol.wt. (x1000) | Molecular form | Poly styrene content | Vinyl- (1,2-add) content |
| A | 10.7 | 71 | 276 | (SB)₂B₂ | 12.7 | 54 |
| B | 11.2 | 87 | 339 | (SB)₂B₂ | 10.8 | 56 |
| C | 10.7 | 81 | 222 | (SB)₂B₂ | 12.5 | 60.5 |
| KRATON D | 13 | | 330 | (SB)_{3.5} | 21 | +/- 5 |
| 1116 | | | | | | |
| Comp. | 12 | 45 | 91 | SBS | 40 | +/- 5 |

From the five photosensitive compositions films of 22 micron thickness were prepared from a solvent based formulation (40% in toluene) by casting.

The films were irradiated under a Fusion D bulb lamp in 1 pass and 2 passes respectively with a speed of 5 m/min, and the gel content was analyzed.

The gel contents have been listed in Table XIX.

**TABLE XIX**

| Gel percentage after irradiation | | |
|---|---|---|
| Polymer | 1 pass | 2 passes |
| A | 59.5 | 85.5 |
| B | 81.0 | 86.9 |
| C | 73.8 | 87.5 |
| KRATON D 1116 | 31.7 | 70.4 |
| Comp. | 0.3 | 9.6 |

(ii) Photosensitive compositions were prepared from the block copolymer identified hereinbefore as A (100 parts by weight), IRGANOX 1010 (1 part by weight) and varying amounts of photosensitizer IRGACURE 651, as listed in the Table XX.

Films of 22 micron thickness were prepared from these compositions and the films were irradiated as described under Example 8(i). The percentage gel after irradiation was determined.

**TABLE XX**

| % gel after irradiation | | |
|---|---|---|
| Composition block Copol./AO/PS | 1 pass | 2 passes |
| 100/1/1 | 46.2 | 73.3 |
| 100/1/2 | 59.5 | 85.5 |
| 100/1/4 | 84.7 | 93.7 |

## Claims

1. A process for curing a UV-curable block copolymer composition by exposing the composition to UV radiation in an oxygen-containing atmosphere which composition comprises:
(a) 100 parts by weight of a multiarmed block copolymer which has the structure according to any one of the general formulae:
(AB)ₙX, (BA)ₙX, (ABA)ₙX, (BAB)ₙX or (AB)ₚ(B)_{q}X,
wherein A is a polymer block of a monovinyl aromatic compound, wherein B is a polymer block of a conjugated diene, wherein n represents an integer of 2 or higher and p and q represent an integer of 1 or higher and wherein X is the residue of the coupling agent used, wherein:
- the content of monovinyl aromatic compound is in the range of from 5 to 50% by weight based on the total weight of block copolymer;
- each block A has an apparent molecular weight in the range of from 1,000 to 50,000; and
- each block B has an apparent molecular weight in the range of from 10,000 to 250,000; and
(b) 0.5-30 parts by weight of at least one photoinitiator, containing a carbonyl group which is directly bound to at least one aromatic ring structure;
and wherein said composition is free from a cross-linking agent.

2. Process according to claim 1, wherein a photoinitiator is used selected from the group consisting of:
(1) at least one benzophenone of the general formula (I) 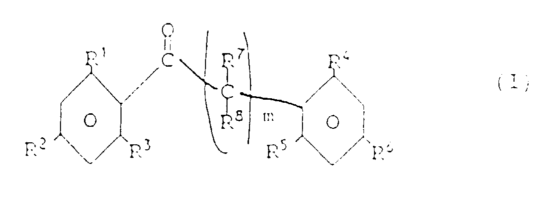 wherein R¹ to R⁸ independently represent hydrogen or an alkyl group having from 1 to 4 carbon atoms and wherein R⁷ and or R⁸ represent in addition alkoxy of 1 to 4 carbon atoms and wherein m has a value of 0,1 or 2, optionally in combination with at least one tertiary amine,
(2) at least one sulphur-containing carbonyl compound, wherein the carbonyl group is directly bound to at least one aromatic ring, preferably of the formula II 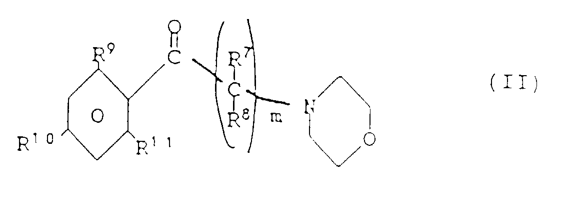 wherein R⁹, R¹⁰, R¹¹ each may represent hydrogen alkyl of 1-4 carbon atoms or an alkylthio group, having 1-4 carbon atoms, and
(3) mixtures of (1) and (2);

3. Process according to claims 1 and 2, wherein the multi-armed block copolymer has a content of monovinyl aromatic compound in the range of from 5 to 25% by weight.

4. Process according to claims 1-3, wherein the photoinitiator is present in an amount of from 5 to 20 pbw per 100 pbw of block copolymer.

5. Process according to any one of claims 1-4, wherein the monovinyl aromatic compound is styrene and the conjugated diene is isoprene, 1,3-butadiene or a mixture thereof.

6. Process according to claim 5, wherein the conjugated diene is isoprene.

7. Process according to claim 1-6, wherein the photoinitiator is selected from the group consisting of benzophenone, a mixture of benzophenone and a tertiary amine, 2,4,6-trimethyl-benzophenone, 4-methylbenzophenone, 2,2-dimethoxy-1,2-diphenylethan-1-one, and 2-methyl-1-[4-(methylthio)phenyl]-2-morpolinopropanone-1, and mixtures thereof.

8. Process according to claim 7, wherein the photoinitiator is 2-methyl-1-[4-methylthio)phenyl]-2-morpholinopropanone-1.

9. A process according to any one of the preceding claims by exposing said composition to UV irradiation in the presence of air.

## Patentansprüche

1. Verfahren zum Härten einer UV-härtbaren Blockcopolymerzusammensetzung durch Einwirkenlassen von UV-Bestrahlung auf die Zusammensetzung in einer sauerstoffhältigen Atmosphäre, welche Zusammensetzung umfaßt:
(a) 100 Gew.-Teile eines mehrarmigen Blockcopolymers, das die Struktur nach einer der allgemeinen Formeln:
(AB)ₙX, (BA)ₙX, (ABA)ₙX, (BAB)ₙX oder (AB)ₚ(B)_{q}X
aufweist, worin A ein Polymerblock aus einer monovinylaromatischen Verbindung ist, B ein Polymerblock aus einem konjugierten Dien ist, n eine ganze Zahl von 2 oder darüber darstellt und p und q eine ganze Zahl von 1 oder darüber bedeuten und worin X den Rest des verwendeten Kupplungsmittels bezeichnet, wobei:
- der Gehalt an monovinylaromatischer Verbindung im Bereich von 5 bis 50 Gew.-%, bezogen auf das Gesamtgewicht des Blockcopolymers, liegt;
- jeder Block A ein scheinbares Molekulargewicht im Bereich von 1000-50000 aufweist; und
- jeder Block B ein scheinbares Molekulargewicht im Bereich von 10000-250000 aufweist; und
(b) 0,5-30 Gew.-Teile wenigstens eines Photoinitiators, der eine Carbonylgruppe enthält, die direkt an wenigstens eine aromatische Ringstruktur gebunden ist;
und worin diese Zusammensetzung frei von einem Vernetzungsmittel ist.

2. Verfahren nach Anspruch 1, worin ein Photoinitiator verwendet wird, der aus einer Gruppe ausgewählt ist, die aus den folgenden Gliedern besteht:
(1) wenigstens ein Benzophenon der allgemeinen Formel (I): 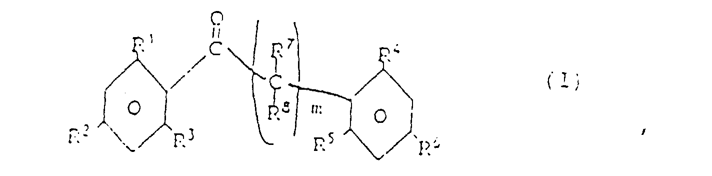 worin R¹ bis R⁸ unabhängig Wasserstoff oder eine Alkylgruppe mit 1 bis 4 Kohlenstoffatomen bedeuten und worin R⁷ und/oder R⁸ zusätzlich Alkoxy mit 1 bis 4 Kohlenstoffatomen darstellen und worin m einen Wert von 0, 1 oder 2 aufweist, gegebenenfalls in Kombination mit wenigstens einem tertiären Amin;
(2) wenigstens eine schwefelhältige Carbonylverbindung, worin die Carbonylgruppe direkt an wenigstens einen aromatischen Ring gebunden ist, vorzugsweise mit der allgemeinen Formel: 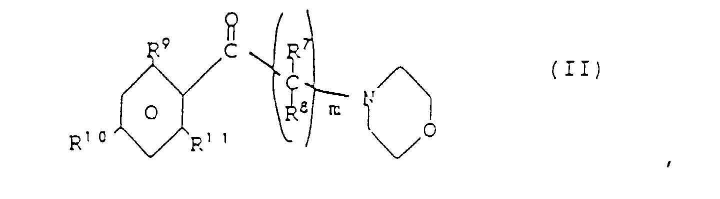 worin R⁹, R¹⁰ und R¹¹ jeweils Wasserstoff, Alkyl mit 1-4 Kohlenstoffatomen oder eine Alkylthiogruppe mit 1 bis 4 Kohlenstoffatomen darstellen können, und
(3) Gemische von (1) mit (2).

3. Verfahren nach den Ansprüchen 1 und 2, worin das mehrarmige Blockcopolymer einen Gehalt an monovinylaromatischer Verbindung im Bereich von 5 bis 25 Gew.-% aufweist.

4. Verfahren nach den Ansprüchen 1 bis 3, worin der Photoinitiator in einer Menge von 5 bis 20 Gew.-Teilen je 100 Gew.-Teile Blockcopolymer zugegen ist.

5. Verfahren nach einem der Ansprüche 1 bis 4, worin die monovinylaromatische Verbindung Styrol ist und das konjugierte Dien Isopren, 1,3-Butadien oder ein Gemisch hievon ist.

6. Verfahren nach Anspruch 5, worin das konjugierte Dien Isopren ist.

7. Verfahren nach Anspruch 1 bis 6, worin der Photoinitiator aus der Gruppe ausgewählt ist, die aus Benzophenon, einem Gemisch aus Benzophenon und einem tert. Amin, 2,4,6-Trimethylbenzophenon, 4-Methylbenzophenon, 2,2-Dimethoxy-1,2-diphenylethan-1-on und 2-Methyl-1-[4-(methylthio)phenyl]-2-morpholinopropanon-1 sowie aus deren Gemischen besteht.

8. Verfahren nach Anspruch 7, worin der Photoinitiator 2-Methyl-1-[4- (methylthio)phenyl]-2-morpholinopropanon-1 ist.

9. Verfahren nach einem der vorstehenden Ansprüche durch Einwirkenlassen von UV-Bestrahlung auf die genannte Zusammensetzung in Gegenwart von Luft.

## Revendications

1. Procédé de durcissement d'une composition d'un copolymère séquencé durcissable par les UV par l'exposition de ladite composition à un rayonnement UV dans une atmosphère contenant de l'oxygène, laquelle composition qui comprend :
(a) 100 parties en poids d'un copolymère séquencé multi-bras, qui possède la structure conforme à l'une quelconque des formules générales qui suivent:
(AB)ₙX, (BA)ₙX, (ABA)ₙX, (BAB)ₙX ou (AB)ₚ(B)_{q}X,
dans lesquelles A représente une séquence polymérique d'un composé monovinylaromatique, B représente une séquence polymérique d'un diène conjugué, où n représente un nombre entier égal à 2 ou plus de 2 et p et q représentent un nombre entier égal à 1 ou supérieur à 1 et X représente le reste de l'agent de couplage utilisé, où :
- la teneur en composé monovinylaromatique varie de 5 à 50% en poids, sur base du poids total du copolymère séquencé,
- chaque séquence A possède un poids moléculaire apparent qui varie de 1.000 à 50.000 et
- chaque séquence B possède un poids moléculaire apparent qui varie de 10.000 à 250.000 et
(b) 0,5 à 30 parties en poids d'au moins un photo-amorceur, contenant un groupe carbonyle, qui est directement lié à au moins une structure cyclique aromatique,
et où ladite composition est dépourvue d'un agent de réticulation.

2. Procédé suivant la revendication 1, caractérisé en ce que l'on utilise un photo-amorceur choisi dans le groupe constitué par:
(1) au moins une benzophénone de la formule générale (I) 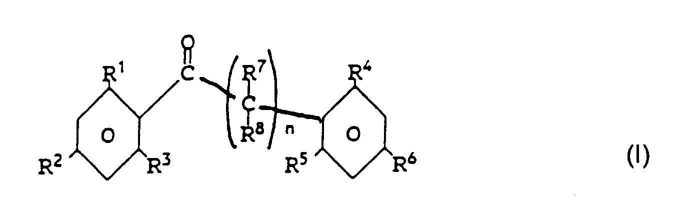 dans laquelle les symboles R¹ à R⁸ représentent chacun indépendamment un atome d'hydrogène ou un radical alkyle possédant de 1 à 4 atomes de carbone et dans laquelle les symboles R⁷ et/ou R⁸ représentent en outre chacun un radical alcoxy comportant de 1 à 4 atomes de carbone et dans laquelle n est égal à 0, 1 ou 2, éventuellement en combinaison avec au moins une amine tertiaire,
(2) au moins un composé carbonylé contenant du soufre, où le radical carbonyle est directement lié à au moins un noyau ou cycle aromatique, de préférence, de la formule générale (II) 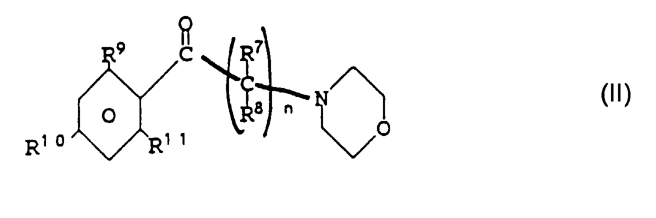 dans laquelle les symboles R⁹, R¹⁰, R¹¹ peuvent chacun représenter un atome d'hydrogène, un radical alkyle comportant de 1 à 4 atomes de carbone ou un radical alkylthio, possédant de 1 à 4 atomes de carbone et
(3) des mélanges de (1) et de (2).

3. Procédé suivant l'une quelconque des revendications 1 et 2, caractérisé en ce que le copolymère séquencé multi-bras possède une teneur en composé monovinylaromatique qui varie de 5 à 25% en poids.

4. Procédé suivant l'une quelconque des revendications 1 à 3, caractérisé en ce que le photo-amorceur est présent en une proportion de 5 à 20 pep par 100 pep de copolymère séquencé.

5. Procédé suivant l'une quelconque des revendications 1 à 4, caractérisé en ce que le composé monovinylaromatique est le styrène et le diène conjugué est l'isoprène, le 1,3-butadiène ou un mélange de ceux-ci.

6. Procédé suivant la revendication 5, caractérisé en ce que le diène conjugué est l'isoprène.

7. Procédé suivant l'une quelconque des revendications 1 à 6, caractérisé en ce que le photo-amorceur est choisi dans le groupe formé par la benzophénone, un mélange de benzophénone et d'une amine tertiaire, la 2,4,6-triméthylbenzophénone, la 4-méthylbenzophénone, la 2,2-diméthoxy-1,2-diphényléthane-1-one et la 2-méthyl-1-[4-(méthylthio)phényl]-2-morpholinopropanone-1 et leurs mélanges.

8. Procédé suivant la revendication 7, caractérisé en ce que le photo-amorceur est la 2-méthyl-1-[4-(méthylthio)phényl]-2-morpholinopropanone-1.

9. Procédé suivant l'une quelconque des revendications précédentes, caractérisé en ce qu'on l'entreprend par l'exposition de ladite composition à un rayonnement UV, en présence d'air.
